# EUROPÄISCHE PATENTSCHRIFT

(11) **EP 4 045 932 B1**
(45) Veröffentlichungstag und Bekanntmachung des Hinweises auf die Patenterteilung: **05.11.2025**
(21) Anmeldenummer: 20772295.0
(22) Anmeldetag: 16.09.2020
(51) Int. Cl.: G01S 7/48, G01S 7/4863, G01S 17/10, G01S 17/42, G01S 17/931, G01S 7/486

(54) **LIDAR-SENSOR ZUR ERFASSUNG EINES OBJEKTS UND VERFAHREN FÜR EINEN LIDARSENSOR**
LIDAR SENSOR FOR DETECTING AN OBJECT AND A METHOD FOR A LIDAR SENSOR
CAPTEUR LIDAR SERVANT À LA DÉTECTION D'UN OBJET ET PROCÉDÉ DESTINÉ À UN CAPTEUR LIDAR

(30) Priorität: 15.10.2019 DE 102019215813
(43) Veröffentlichungstag der Anmeldung: 24.08.2022
(73) Patentinhaber: Robert Bosch GmbH, 70442 Stuttgart (DE)
(72) Erfinder: SCHMIDTKE, Bernd, 71229 Leonberg (DE); FRITZ, Steffen, 75449 Wurmberg (DE); SCHNITZER, Reiner, 72762 Reutlingen (DE); BOGATSCHER, Siegwart, 71229 Leonberg (DE); GREINER, Alexander, 73262 Reichenbach (DE)
(86) Internationale Anmeldenummer: PCT/EP2020/075835
(87) Internationale Veröffentlichungsnummer: WO 2021/073826

(56) Entgegenhaltungen:
- WO-A1-2019/064062
- DE-A1- 102016 221 049
- US-A1- 2018 341 009

## Beschreibung

Die vorliegende Erfindung betrifft einen LIDAR-Sensor zur Erfassung wenigstens eines Objekts in einem Sichtfeld des LIDAR-Sensors und ein Verfahren für einen LIDAR-Sensor zur Erfassung eines Objekts in einem Sichtfeld des LIDAR-Sensors.

### Stand der Technik

LIDAR-Sensoren werden sich in den nächsten Jahren bei der Realisierung hochautomatisierter Fahrfunktionen etablieren. Zur Abdeckung großer horizontaler Erfassungswinkel zwischen 150° und 360° sind heute mechanische Laserscanner bekannt. Bei einer ersten Ausprägung, den Drehspiegel-Laserscannern, deren maximalen Erfassungsbereich auf etwa 120° beschränkt ist, dreht sich ein motorgetriebener Ablenkspiegel. Für größere Erfassungsbereiche bis zu 360° befinden sich alle elektrooptischen Komponenten auf einem motorgetriebenen Drehteller oder Rotor.

DE 10 2016 221 049 A1 beschreibt eine Vorrichtung zum Empfangen eines reflektierten Lichtpulses in einem Lidar-System, umfassend ein Sensor-Array, welches eine Vielzahl einzelner Sensorelemente umfasst, die dazu eingerichtet sind, Lichtpulse zu erfassen und eine Auswahlschaltung, welche dazu eingerichtet ist, einige der Sensorelemente auszuwählen und diese zu einem Makropixel zusammenzufassen.

US 2018/0341009 A1 beschreibt eine elektro-optische Vorrichtung, die eine Laserlichtquelle und eine Strahlsteuerungsvorrichtung umfasst. Sensoreinheit geben ein Signal aus, das den Zeitpunkt des Auftreffens eines einzelnen Photons aus der Zielszene auf das Sensoreinheit angibt. Die Schaltung verarbeitet das Signal, um die jeweiligen Entfernungen zu Punkten in der Szene zu bestimmen. Eine Sensoreinheit umfasst Sensorelement, die zu "Super-Pixeln" zusammengefasst werden.

WO 2019/064062 beschreibt ein LIDAR-System mit einem Prozesser sowie einer Lichtquelle und Sensoren zum Empfang von Signalen zur Bestimmung der Entfernung eines Objekts.

### Offenbarung der Erfindung

Die vorliegende Erfindung geht aus von einem LIDAR-Sensor zur Erfassung wenigstens eines Objekts in einem Sichtfeld des LIDAR-Sensors. Der LIDAR-Sensor umfasst eine Sendeeinheit mit wenigstens einer Laserquelle zum Erzeugen und Aussenden von Primärlicht in das Sichtfeld; eine Empfangseinheit mit wenigstens einer Detektoreinheit zum Empfangen von Sekundärlicht, das im Sichtfeld von einem Objekt reflektiert und/oder gestreut wurde; und wobei die Detektoreinheit eine Subdetektoranordnung aus mehreren in einer ersten Erstreckungsrichtung nebeneinander und/oder in einer zweiten Erstreckungsrichtung hintereinander angeordneter Subdetektoren umfasst. Der LIDAR-Sensor umfasst weiterhin eine Prozessoreinheit mit einer Verarbeitungsschaltung, welche dazu ausgebildet ist, detektiertes Sekundärlicht zu verarbeiten und verarbeitetes Sekundärlicht auszuwerten, aus einer Mehrzahl von Subdetektoren eine erste Gruppe auszuwählen und zu einem ersten Makropixel zu gruppieren, und gleichzeitig wenigstens eine zweite Gruppe auszuwählen und zu wenigstens einem zweiten Makropixel zu gruppieren, wobei der erste Makropixel und wenigstens einer der zweiten Makropixel wenigstens einen selben Subdetektor umfassen. Mit anderen Worten sind jeweils wenigstens zwei Makropixel miteinander überlappend ausgebildet.

Mittels eines LIDAR-Sensors kann ein Abstand zwischen dem LIDAR-Sensor und einem Objekt im Sichtfeld des LIDAR-Sensors zum Beispiel auf der Basis einer Signallaufzeit (Time of Flight, TOF) bestimmt werden. Die Sendeeinheit kann dazu ausgebildet sein, das Primärlicht als punktförmigen Strahl oder als Strahl in Form einer Linie oder in Form eines Ausleuchtungsmusters auszugeben. Insbesondere kann die Laserquelle dazu ausgebildet sein, das Primärlicht als punktförmigen Strahl oder als Strahl in Form einer Linie oder in Form eines Ausleuchtungsmusters auszugeben. Ein Ausleuchtungsmuster kann hierbei eine erste Richtung und eine zweite Richtung aufweisen, wobei die erste Richtung und die zweite Richtung orthogonal zueinander angeordnet sind, und wobei eine Ausdehnung des Ausleuchtungsmusters entlang der ersten Richtung größer ist als eine Ausdehnung des Ausleuchtungsmusters entlang der zweiten Richtung.

Das Sichtfeld des LIDAR-Sensors kann mittels des ausgesendeten Primärlichts abgetastet werden. Die Ausdehnung des Sichtfelds kann hierbei durch einen horizontalen und einen vertikalen Abtastwinkel, sowie durch die Reichweite des Primärlichts vorgegeben sein. Bei einem abtastenden LIDAR-Sensor wird das Primärlicht in unterschiedliche Abtastwinkel ausgesendet und wieder empfangen. Aus diesen winkelabhängigen Einzelmessungen kann anschließend ein Umgebungsbild abgeleitet werden. Der LIDAR-Sensor kann weiterhin eine Ablenkeinheit umfassen. Das Aussenden des Primärlichts in unterschiedliche Abtastwinkel, sprich die Ablenkung des Primärlichts in das Sichtfeld, kann mittels der Ablenkeinheit erfolgen.

Die Detektoreinheit ist insbesondere als SPAD-Detektor ausgebildet. SPAD steht hierbei für Single Photon Avalanche Photodiode. Der SPAD-Detektor kann als Subdetektoren sogenannte SPAD-Zellen aufweisen. Die Subdetektoranordnung ist insbesondere matrixförmig ausgebildet. Es können wenigstens zwei Subdetektoren dazu ausgebildet sein, gleichzeitig Sekundärlicht zu empfangen. Insbesondere können die Subdetektoren der Subdetektoreinheit dazu ausgebildet sein, alle gleichzeitig Sekundärlicht zu empfangen. Die Detektoreinheit ist dazu ausgebildet, das empfangene Sekundärlicht zu detektieren. Die Prozessoreinheit ist dazu ausgebildet, detektiertes Sekundärlicht zu verarbeiten. Das Auswählen einer ersten Gruppe aus einer Mehrzahl von Subdetektoren und das Gruppieren zu einem ersten Makropixel und das gleichzeitige Auswählen einer zweiten Gruppe aus der Mehrzahl von Subdetektoren und das Gruppieren zu einem zweiten Makropixel kann auch als Verknüpfen der Subdetektoren bezeichnet werden. Mit anderen Worten kann die Prozessoreinheit beispielsweise dazu ausgebildet sein, mehrere SPAD-Zellen eines SPAD-Detektors verknüpfen. Die Prozessoreinheit beinhaltet eine Verarbeitungsschaltung, die bevorzugt als anwendungsspezifische integrierte Schaltung (ASIC), als Field Programmable Gate Array (FPGA), Prozessor, digitaler Signalprozessor, Mikrocontroller, o.ä., ausgestaltet sein kann. Die Prozessoreinheit kann informationstechnisch an eine interne und/oder externe Speichereinheit angebunden sein. Die Prozessoreinheit kann weiterhin dazu ausgebildet sein, die Laserquelle anzusteuern, z. B. zum Aussenden eines gepulsten Primärlichts. Die Prozessoreinheit ist weiterhin dazu ausgebildet, verarbeitetes Sekundärlicht auszuwerten. Das Ergebnis einer Auswertung kann beispielsweise für eine Fahrerassistenzfunktion eines Fahrzeugs verwendet werden. Das Ergebnis der Auswertung kann beispielsweise für eine Steuerung eines autonom fahrenden Fahrzeugs verwendet werden. Der LIDAR-Sensor kann insbesondere für die Verwendung in einem wenigstens teilweise autonom fahrenden Fahrzeug ausgebildet sein. Mit dem LIDAR-Sensor kann teilautonomes oder autonomes Fahren von Fahrzeugen auf Autobahnen und im Stadtverkehr realisiert werden.

Der Vorteil der Erfindung besteht darin, dass die Reichweite des LIDAR-Sensors erhöht werden kann. Insbesondere kann die Reichweite für bestimmte Szenarien des LIDAR-Sensors deutlich erhöht werden. Beispielsweise können Objekte mit geringer Höhe und Breite auch in größerer Entfernung gut erfasst werden. Solche kleineren Objekte sind insbesondere kleiner als beispielsweise ein Fremdfahrzeug in gleicher Entfernung zum LIDAR-Sensor. Beispielsweise können verlorene Frachtstücke in größerer Entfernung auf einer Fahrbahn gut erfasst werden. Derartige Objekte können mit größerer Genauigkeit lokalisiert werden. Hierdurch kann eine größere Reichweite des LIDAR-Sensors für derartige Objekte erreicht werden. Gleichzeitig kann dennoch die Datenmenge vor allem bezüglich des detektierten Sekundärlicht geringgehalten werden.

In einer vorteilhaften Ausgestaltung der Erfindung ist vorgesehen, dass der wenigstens eine zweite Makropixel entlang der ersten Erstreckungsrichtung und/oder entlang der zweiten Erstreckungsrichtung verschoben zum ersten Makropixel gruppierbar ist. Der Vorteil dieser Ausgestaltung besteht darin, dass verhindert werden kann, dass unnötig viel störendes Hintergrundlicht die Messung des LIDAR-Sensors negativ beeinflusst.

In einer weiteren vorteilhaften Ausgestaltung der Erfindung ist vorgesehen, dass der wenigstens eine zweite Makropixel um genau einen Subdetektor verschoben zum ersten Makropixel gruppierbar ist. Der Vorteil dieser Ausgestaltung besteht darin, dass gewährleistet werden kann, dass von einem Objekt nicht nur ein einziger, sondern mindestens zwei Punkte erfasst werden. Hierdurch wird eine bessere Verifikation des Objekts ermöglicht.

Die Erfindung geht weiterhin aus von einem Verfahren für einen LIDAR-Sensor zur Erfassung eines Objekts in einem Sichtfeld des LIDAR-Sensors. Das Verfahren weist folgende Schritte auf: Erzeugen und Aussenden von Primärlicht in das Sichtfeld mittels einer wenigstens eine Laserquelle aufweisenden Sendeeinheit; Empfangen von Sekundärlicht, das im Sichtfeld von einem Objekt reflektiert und/oder gestreut wurde, mittels einer wenigstens eine Detektoreinheit aufweisenden Empfangseinheit, wobei die Detektoreinheit eine Subdetektoranordnung aus mehreren in einer ersten Erstreckungsrichtung nebeneinander und/oder in einer zweiten Erstreckungsrichtung hintereinander angeordneter Subdetektoren umfasst; Auswählen einer ersten Gruppe Subdetektoren aus einer Mehrzahl von Subdetektoren, und Gruppieren dieser ersten Gruppe zu einem ersten Makropixel mittels einer Prozessoreinheit mit einer Verarbeitungsschaltung, und gleichzeitiges Auswählen wenigstens einer zweiten Gruppe Subdetektoren aus der Mehrzahl von Subdetektoren und Gruppieren dieser wenigstens zweiten Gruppe zu wenigstens einem zweiten Makropixel mittels der Prozessoreinheit, wobei der erste Makropixel und wenigstens einer der zweiten Makropixel wenigstens einen selben Subdetektor umfassen; Auswertung des ersten und des wenigstens einen zweiten Makropixels mittels der Prozessoreinheit; und Erfassung wenigstens eines Objekts im Sichtfeld anhand wenigstens des ersten ausgewerteten Makropixels.

Es ist vorgesehen, dass die Erfassung des wenigstens einen Objekts zusätzlich anhand des wenigstens einen zweiten ausgewerteten Makropixels erfolgt. Der Vorteil dieser Ausgestaltung besteht darin, dass die Wahrscheinlichkeit der Erfassung eines Objekts erhöht werden kann. Dadurch, dass das erste Makropixel und wenigstens eines der zweiten Makropixel wenigstens einen selben Subdetektor umfassen, kann die Auswertung wesentlich genauer erfolgen. Ein kleines Objekt in größerer Reichweite kann mit höherer Wahrscheinlichkeit in wenigsten dem ersten Makropixel oder dem wenigstens einen zweiten Makropixel erfasst werden.

Erfindungsgemäß ist vorgesehen, dass die Erfassung des wenigstens einen Objekts nur dann zusätzlich anhand des wenigstens einen zweiten ausgewerteten Makropixels erfolgt, wenn anhand des ersten ausgewerteten Makropixels kein Objekt erfassbar ist. Mit anderen Worten ist es möglich, die Daten des wenigstens einen zweiten Makropixels nur dann zur Erfassung heranzuziehen, wenn anhand des ersten ausgewerteten Makropixels kein Objekt erfassbar ist. Ist hingegen bereits anhand des ersten ausgewerteten Makropixels ein Objekt erfassbar, können die Daten des wenigstens einen zweiten Makropixel für die Erfassung des Objekts verworfen werden. Der Vorteil dieser Ausgestaltung besteht darin, dass die Datenmenge geringgehalten werden kann.

In einer weiteren vorteilhaften Ausgestaltung der Erfindung ist vorgesehen, dass die Erfassung des wenigstens einen Objekts anhand eines nach einem vorgegbaren Kriterium ausgewählten Makropixels erfolgt. Das ausgwählte Makropixel kann hierbei das erste Makropixel oder ein wenigstens zweites Makropixel sein. Mit anderen Worten ist es möglich, die Daten nur eines ausgewählten Makropixels zur Erfassung heranzuziehen, wenn anhand wenigstens zweier Makropixel ein Objekt erfassbar ist. Es wird in diesem Fall beispielsweise nur das Makropixel ausgewählt, für welches das beste Signal-zu-Rausch-Verhältnis des empfangenen Sekundärlichts auftritt. Das vorgegebene Kriterium kann also ein Signal-zu-Rausch-Verhältnis sein. Das vorgegebene Kriterium kann insbesondere eine Amplitude des empfangenen Sekundärlicht in jedem zur Auswahl stehenden Makropixel sein. Der Vorteil dieser Ausgestaltung besteht darin, dass die Datenmenge geringgehalten werden kann.

In einer weiteren vorteilhaften Ausgestaltung der Erfindung ist vorgesehen, dass an eine Prozessoreinheit des LIDAR-Sensors die Information übertragen wird, dass es sich um einen ausgewählten Makropixel handelt. Insbesondere wird an die Prozessoreinheit die Information übertragen, dass anhand der nicht ausgewählten Makropixel ebenfalls ein Objekt erfassbar wäre. Der Vorteil dieser Ausgestaltung besteht darin, dass bei der Erfassung des Objekts Rückschlüsse auf dessen Größe möglich sind. Bei einem größeren Objekt kann es möglich sein, aus einer höheren Anzahl von Makropixeln auszuwählen, mittels der ein Objekt erfassbar ist, als bei einem kleineren Objekt.

In einer vorteilhaften Ausgestaltung der Erfindung ist vorgesehen, dass der wenigstens eine zweite Makropixel entlang der ersten Erstreckungsrichtung und/oder entlang der zweiten Erstreckungsrichtung verschoben zum ersten Makropixel gruppiert wird.

In einer vorteilhaften Ausgestaltung der Erfindung ist vorgesehen, dass der wenigstens eine zweite Makropixel um genau einen Subdetektor verschoben zum ersten Makropixel gruppiert wird.

Die Erfindung geht weiterhin aus von einem Computerprogramm, welches eingerichtet ist, alle Schritte des oben beschriebenen Verfahrens auszuführen.

Die Erfindung geht weiterhin aus von einem maschinenlesbaren Speichermedium, auf dem das oben beschriebene Computerprogramm gespeichert ist.

### Zeichnungen

Nachfolgend werden Ausführungsbeispiele der vorliegenden Erfindung anhand der beiliegenden Zeichnungen näher erläutert. Gleiche Bezugszeichen in den Figuren bezeichnen gleiche oder gleichwirkende Elemente. Es zeigen:
- Figur 1: ein Ausführungsbeispiel eines LIDAR-Sensors;
- Figur 2: ein erstes Ausführungsbeispiel der Auswahl und Gruppierung von Subdetektoren zu Makropixeln;
- Figur 3: ein zweites Ausführungsbeispiel der Auswahl und Gruppierung von Subdetektoren zu Makropixeln;
- Figur 4: ein drittes Ausführungsbeispiel der Auswahl und Gruppierung von Subdetektoren zu Makropixeln;
- Figur 5: ein Anwendungsbeispiel für den LIDAR-Sensor zur Erfassung eines Objekts;
- Figur 6: ein Ausführungsbeispiel für ein Verfahren für den LIDAR-Sensor zur Erfassung eines Objekts.

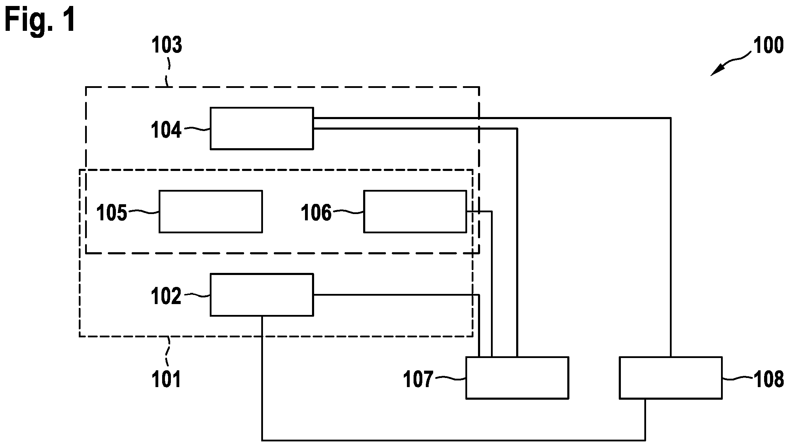

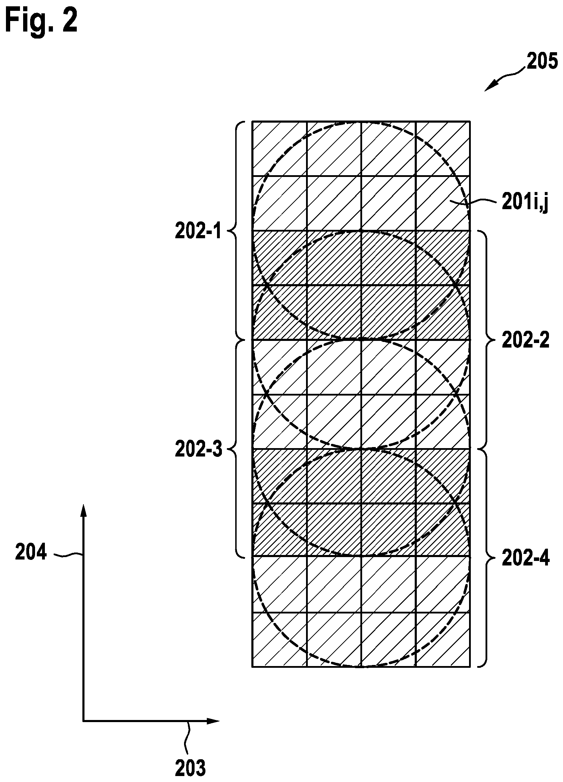

Figur 1 zeigt als ein Ausführungsbeispiel den LIDAR-Sensor 100 zur Erfassung eines Objekts in einem Sichtfeld des LIDAR-Sensors 100. Der LIDAR-Sensor 100 weist die Sendeeinheit 101 mit der Laserquelle 102 zum Erzeugen und Aussenden von Primärlicht in das Sichtfeld auf. Der LIDAR-Sensor 100 weist weiterhin die Empfangseinheit 103 mit der Detektoreinheit 104 zum Empfangen von Sekundärlicht, das im Sichtfeld von einem Objekt reflektiert und/oder gestreut wurde, auf. Die Detektoreinheit 104 umfasst eine matrixförmige Subdetektoranordnung, deren Aufbau und Funktionsweise beispielhaft in den Figuren 2-4 näher erläutert wird. Der LIDAR-Sensor 100 weist weiterhin eine Prozessoreinheit 108 auf, welche dazu ausgebildet ist, aus einer Mehrzahl von Subdetektoren der Subdetektoranordnung eine erste Gruppe auszuwählen und zu einem ersten Makropixel zu gruppieren, und gleichzeitig wenigstens eine zweite Gruppe auszuwählen und zu wenigstens einem zweiten Makropixel zu gruppieren, wobei der erste Makropixel und wenigstens einer der zweiten Makropixel wenigstens einen selben Subdetektor umfassen. Auch dies wird bei der Beschreibung der Figuren 2-4 näher erläutert werden.

Die Sendeeinheit 101 kann weiterhin wenigstens eine optische Komponente 105 aufweisen. Eine optische Komponente 105 kann beispielsweise ein refraktives optisches Element, ein diffraktives optisches Element oder ein Spiegel sein. Die Sendeeinheit 101 kann weiterhin eine Ablenkeinheit 106 aufweisen. Mittels der Ablenkeinheit 106 kann es ermöglicht werden, das Sichtfeld des LIDAR-Sensors 100 abzutasten. Die Empfangseinheit 103 kann weiterhin wenigstens eine optische Komponente 105 aufweisen. Die Empfangseinheit 103 kann weiterhin eine Ablenkeinheit 106 aufweisen. Die Sendeeinheit 101 und die Empfangseinheit 103 weisen im gezeigten Beispiel dieselbe optische Komponente 105 und dieselbe Ablenkeinheit 106 auf. Alternativ und hier nicht gezeigt kann die Sendeeinheit 101 eine optische Komponente 105 aufweisen, welches sich von einer zweiten optischen Komponente 105 der Empfangseinheit 103 unterscheidet. Alternativ und hier nicht gezeigt kann die Sendeeinheit 101 eine Ablenkeinheit 106 aufweisen, welche sich von einer zweiten Ablenkeinheit 106 der Empfangseinheit 103 unterscheidet.

Der LIDAR-Sensor 100 kann weiterhin die Steuereinheit 107 aufweisen. Die Steuereinheit 107 kann dazu ausgebildet sein, die Laserquelle 102 anzusteuern. Die Steuereinheit 107 kann dazu ausgebildet sein, die Detektoreinheit 104 anzusteuern. Die Steuereinheit 107 kann dazu ausgebildet sein, die Ablenkeinheit 106 anzusteuern. Die Prozessoreinheit 108 kann mit der Steuereinheit 107 verbunden sein. Die Prozessoreinheit 108 und die Steuereinheit 107 können auch gemeinsam als Prozessoreinheit ausgebildet sein. Somit kann die Prozessoreinheit auch dazu ausgebildet sein, die Laserquelle anzusteuern, z.B. zum Aussenden eines gepulsten Primärlichts. Die Prozessoreinheit 108 ist weiterhin dazu ausgebildet, verarbeitetes Sekundärlicht auszuwerten.

Figur 2 zeigt ein erstes Ausführungsbeispiel der Auswahl und Gruppierung von Subdetektoren zu Makropixeln. Es ist eine matrixförmige Subdetektoranordnung 205 gezeigt, wie sie beispielsweise in einer Detektoreinheit 104 aus Figur 1 verwendet wird. Die Detektoreinheit 104 ist hierbei insbesondere als SPAD-Detektor ausgebildet. Die Subdetektoren 201i,j können in diesem Fall als SPAD-Zellen ausgebildet sein. Die Subdetektoranordnung 205 ist matrixförmig ausgebildet und umfasst mehrere Subdetektoren 201i,j. In einer ersten Erstreckungsrichtung 203 sind jeweils vier Subdetektoren 201 (i=1-4) nebeneinander und in einer zweiten Erstreckungsrichtung 204 sind jeweils zehn Subdetektoren 201(j=1-10) hintereinander angeordnet. Der Index i bezeichnet die Nummer eines Subdetektors entlang der ersten Erstreckungsrichtung 203, der Index j bezeichnet die Nummer eines Subdetektors entlang der zweiten Erstreckungsrichtung 204.

Die beispielhaft in Figur 1 gezeigte Prozessoreinheit 108 des LIDAR-Sensors 100 ist dazu ausgebildet, aus den Subdetektoren 201i,j eine erste Gruppe auszuwählen und zu einem ersten Makropixel 202-1 zu gruppieren. Das erste Makropixel 202-1 umfasst im gezeigten Beispiel die Subdetektoren 201(1,1) bis 201(4,4). Zur besseren Verdeutlichung wurden diese 16 oberen Subdetektoren 201i,j zusätzlich mit dem oberen gepunkteten Kreis umrandet. In einem anderen Ausführungsbeispiel könnte ein Makropixel auch eine Anzahl an Subdetektoren 201i,j umfassen, welche von 16 verschieden ist. Die Prozessoreinheit 108 ist weiterhin dazu ausgebildet, aus den Subdetektoren 201i,j gleichzeitig wenigstens eine zweite Gruppe auszuwählen und zu wenigstens einem zweiten Makropixel zu gruppieren. Dies sind im in Figur 2 gezeigten Beispiel die weiteren Makropixel: 202-2, welches die Subdetektoren 201(1,3) bis 201(4,6) umfasst, welche mit dem zweiten, gepunkteten Kreis von oben umrandet sind; 202-3, welches die Subdetektoren 201(1,5) bis 201(4,8) umfasst, welche mit dem dritten, gepunkteten Kreis von oben umrandet sind; und 202-4, welches die Subdetektoren 201(1,7) bis 201(4,10) umfasst, welche mit dem vierten, gepunkteten Kreis von oben umrandet sind. Immer zwei der hier gezeigten Makropixel 202-1 bis 202-4 umfassen hierbei wenigstens einen selben Subdetektor 201i,j. So umfassen beispielsweise der Makropixel 202-1 und der Makropixel 202-2 beide die Subdetektoren 201(1,3) bis 201(4,4). Der Makropixel 202-2 und der Makropixel 202-3 umfassen beide die Subdetektoren 201(1,5) bis 201(4,6). Der Makropixel 202-3 und der Makropixel 202-4 umfassen beide die Subdetektoren 201(1,7) bis 201(4,8). Mit anderen Worten sind jeweils wenigstens zwei der Makropixel 202-1 bis 202-4 miteinander überlappend ausgebildet. Für jedes der Makropixel 202-1 bis 202-4 kann mittels der Prozessoreinheit 108 ein Histogramm erzeugt und ausgewertet werden.

Dadurch, dass die Prozessoreinheit 108 dazu ausgebildet ist, Subdetektoren 201i,j zu Makropixeln 202-1 bis 202-4 in der eben beschriebenen Art zu gruppieren, können auch kleinere Objekte in größeren Reichweiten, sprich in größerer Entfernung vom LIDAR-Sensor 100, mittels des LIDAR-Sensors 100 erfasst werden. Es kann vermieden werden, dass unnötig viel störendes Hintergrundlicht die Messung beeinträchtigt. Wäre die Prozessoreinheit 108 lediglich dazu ausgebildet, Subdetektoren 201i,j zu Makropixel zu gruppieren, die nicht wenigstens einen selben Subdetektor 201i,j umfassen, wäre die Erfassung kleinerer Objekte in größeren Reichweiten wesentlich erschwert oder gar nicht möglich. Wäre die Prozessoreinheit 108 beispielsweise lediglich dazu ausgebildet, Subdetektoren 201i,j zu den Makropixel 202-1 und 202-3 zu gruppieren, wäre die Wahrscheinlichkeit groß, dass insbesondere ein kleines Objekt in größerer Reichweite nur halb oder gar nicht von einem derartigen Makropixel erfasst werden würde. Wäre die Prozessoreinheit 108 beispielsweise lediglich dazu ausgebildet, Subdetektoren 201i,j zu kleineren Makropixel zu gruppieren (zum Beispiel ein erstes Makropixel aus den Subdetektoren 201(1,1) bis 201(4,2), ein zweites Makropixel aus den Subdetektoren 201(1,3) bis 201(4,4) usw.), Wäre eine Erfassung kleinerer Objekte gegebenenfalls möglich, jedoch nur in einer geringeren Entfernung vom LIDAR-Sensor 100 als mittels der in Figur 2 beispielhaft beschriebenen Möglichkeit der Makropixel-Bildung.

Gemäß dem Beispiel aus Figur 2 sind die Makropixel entlang der zweiten Erstreckungsrichtung 204 verschoben gruppierbar. Beispielsweise ist das zweite Makropixel 202-2 entlang der Erstreckungsrichtung 204 verschoben zum ersten Makropixel 202-1 gruppierbar. Gleiches gilt für die beiden weiteren Makropixel 202-3 und 202-4.

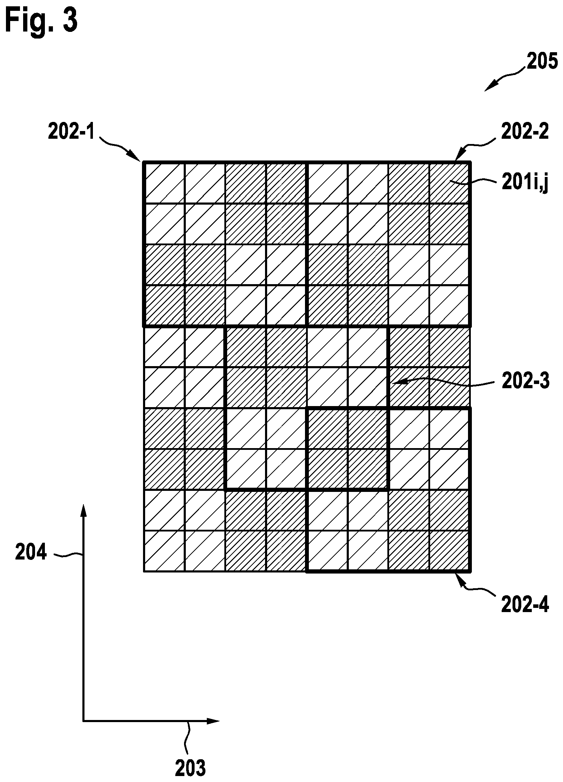

Figur 3 zeigt ein zweites Ausführungsbeispiel der Auswahl und Gruppierung von Subdetektoren 201i,j zu Makropixeln 202-1 bis 202-4. Es ist ein weiteres Beispiel einer matrixförmige Subdetektoranordnung 205 gezeigt, wie sie beispielsweise in einer Detektoreinheit 104 aus Figur 1 verwendet wird. Die Subdetektoranordnung 205 ist matrixförmig ausgebildet und umfasst mehrere Subdetektoren 201i,j. Die Subdetektoren 201i,j können auch in diesem Beispiel als SPAD-Zellen ausgebildet sein. In einer ersten Erstreckungsrichtung 203 sind jeweils acht Subdetektoren 201(i=1-8) nebeneinander und in einer zweiten Erstreckungsrichtung 204 sind jeweils zehn Subdetektoren 201(j=1-10) hintereinander angeordnet. Der Index i bezeichnet wiederrum die Nummer eines Subdetektors entlang der ersten Erstreckungsrichtung 203, der Index j bezeichnet wiederrum die Nummer eines Subdetektors entlang der zweiten Erstreckungsrichtung 204.

Die beispielhaft in Figur 1 gezeigte Prozessoreinheit 108 des LIDAR-Sensors 100 ist dazu ausgebildet, aus den Subdetektoren 201i,j der in Figur 3 gezeigten Subdetektoranordnung 205 eine erste Gruppe auszuwählen und zu einem ersten Makropixel 202-1 zu gruppieren. Die Prozessoreinheit 108 ist weiterhin dazu ausgebildet, aus den Subdetektoren 201i,j gleichzeitig wenigstens eine zweite Gruppe auszuwählen und zu wenigstens einem zweiten Makropixel 202-2 bis 202-4 zu gruppieren. Die Makropixel 202-1 bis 202-4 umfassen in Figur 3 jeweils 16 Subdetektoren 201i,j, welche zur Verdeutlichung dicker umrandet sind. Das erste Makropixel 202-1 umfasst beispielsweise die 16 umrandeten Subdetektoren 201i,j im oberen linken Bereich der Subdetektoranordnung 205, das zweite Makropixel 202-2 die 16 umrandeten Subdetektoren 201i,j im oberen rechten Bereich der Subdetektoranordnung 205, das dritte Makropixel 202-3 die 16 umrandeten Subdetektoren 201i,j in einem mittleren, unteren Bereich der Subdetektoranordnung 205 und das vierte Makropixel 202-4 die 16 umrandeten Subdetektoren 201i,j im unteren rechten Bereich der Subdetektoranordnung 205. In einem anderen Ausführungsbeispiel könnte ein Makropixel auch eine Anzahl an Subdetektoren 201i,j umfassen, welche von 16 verschieden ist.

Die in Figur 3 gezeigten Makropixel 202-1 bis 202-4 stellen hierbei willkürlich ausgewählte Beispiele möglicher Makropixel dar. Die Prozessoreinheit 108 kann dazu ausgebildet sein, aus den Subdetektoren 201i,j der in Figur 3 gezeigten Subdetektoranordnung 205 noch weitere Gruppen auszuwählen und zu weiteren Makropixeln 202-n zu gruppieren. Jedoch wurden der Übersicht halber nicht alle Möglichkeiten dargestellt. Es umfassen wiederrum wenigstens ein erster Makropixel und ein zweiter Makropixel wenigstens einen selben Subdetektor 201i,j. In Figur 3 wird dies beispielhaft für die Makropixel 202-3 und 202-4 deutlich. Mit anderen Worten sind auch hier jeweils wenigstens zwei der Makropixel 202-1 bis 202-4 miteinander überlappend ausgebildet. Für jedes der Makropixel 202-1 bis 202-4 kann mittels der Prozessoreinheit 108 ein Histogramm erzeugt und ausgewertet werden.

Weiterhin wird anhand der Figur 3 deutlich, dass bei diesem Ausführungsbeispiel die Makropixel 202-2 bis 202-4 entlang der ersten Erstreckungsrichtung 203 und/oder entlang der zweiten Erstreckungsrichtung 204 verschoben zum ersten Makropixel 202-1 gruppierbar sind. So ist beispielsweise Makropixel 202-2 entlang der ersten Erstreckungsrichtung 203 verschoben zum ersten Makropixel 202-1 gruppierbar. Die beispielhaft gezeigten Makropixel 202-3 und 202-4 sind entlang der ersten Erstreckungsrichtung 203 und entlang der zweiten Erstreckungsrichtung 204 verschoben zum ersten Makropixel 202-1 gruppierbar. Durch die Gruppierung entlang der ersten Erstreckungsrichtung 203 und/oder entlang der zweiten Erstreckungsrichtung 204 kann eine weitere Verbesserung der Reichweite bei der Erkennung kleiner Objekte erzielt werden.

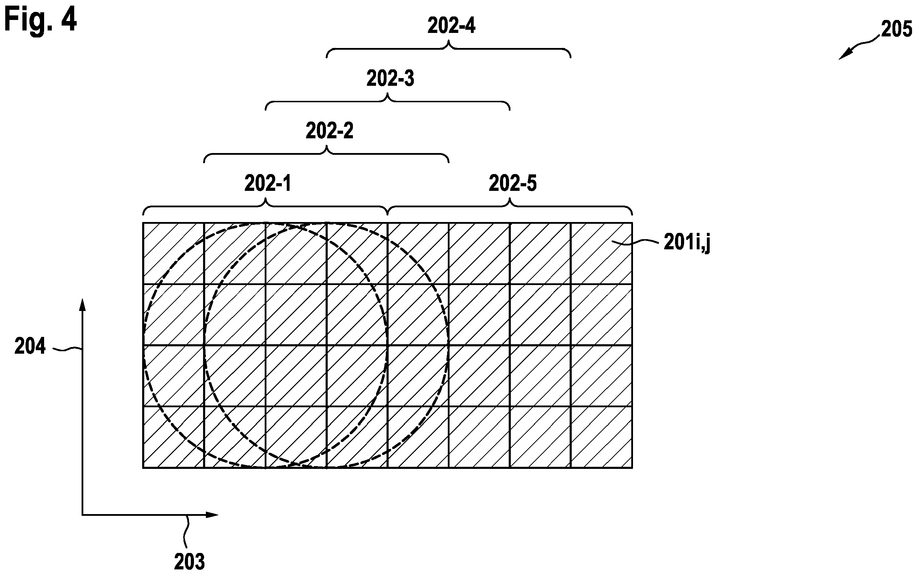

Figur 4 zeigt ein drittes Ausführungsbeispiel der Auswahl und Gruppierung von Subdetektoren 201i,j zu den Makropixeln 202-1 bis 202-5. Es ist ein weiteres Beispiel einer matrixförmige Subdetektoranordnung 205 gezeigt, wie sie beispielsweise in einer Detektoreinheit 104 aus Figur 1 verwendet wird. Die Subdetektoranordnung 205 ist matrixförmig ausgebildet und umfasst mehrere Subdetektoren 201i,j. Die Subdetektoren 201i,j können auch in diesem Beispiel als SPAD-Zellen ausgebildet sein. In einer ersten Erstreckungsrichtung 203 sind jeweils acht Subdetektoren 201(i=1-8) nebeneinander und in einer zweiten Erstreckungsrichtung 204 sind jeweils vier Subdetektoren 201(j=1-4) hintereinander angeordnet. Der Index i bezeichnet wiederrum die Nummer eines Subdetektors entlang der ersten Erstreckungsrichtung 203, der Index j bezeichnet wiederrum die Nummer eines Subdetektors entlang der zweiten Erstreckungsrichtung 204.

Die beispielhaft in Figur 1 gezeigte Prozessoreinheit 108 des LIDAR-Sensors 100 ist dazu ausgebildet, aus den Subdetektoren 201i,j eine erste Gruppe auszuwählen und zu einem ersten Makropixel 202-1 zu gruppieren. Das erste Makropixel 202-1 umfasst im gezeigten Beispiel die Subdetektoren 201(1,1) bis 201(4,4). Zur besseren Verdeutlichung wurden diese 16 Subdetektoren 201i,j zusätzlich mit dem linken gepunkteten Kreis umrandet. In einem anderen Ausführungsbeispiel könnte ein Makropixel auch eine Anzahl an Subdetektoren 201i,j umfassen, welche von 16 verschieden ist. Die Prozessoreinheit 108 ist weiterhin dazu ausgebildet, aus den Subdetektoren 201i,j gleichzeitig wenigstens eine zweite Gruppe auszuwählen und zu wenigstens einem zweiten Makropixel zu gruppieren. Dies sind im in Figur 4 gezeigten Beispiel die weiteren Makropixel: 202-2, welches die Subdetektoren 201(2,1) bis 201(5,4) umfasst, welche mit dem zweiten, gepunkteten Kreis von links umrandet sind; 202-3, welches die Subdetektoren 201(3,1) bis 201(6,4) umfasst; 202-4, welches die Subdetektoren 201(4,1) bis 201(7,4) umfasst; und 202-5, welches die Subdetektoren 201(5,1) bis 201(8,4) umfasst. Immer wenigstens zwei der hier gezeigten Makropixel 202-1 bis 202-5 umfassen hierbei wenigstens einen selben Subdetektor 201i,j. So umfassen beispielsweise der Makropixel 202-1 und der Makropixel 202-2 beide die Subdetektoren 201(2,1) bis 201(4,4). Der Makropixel 202-2 und der Makropixel 202-3 umfassen beide die Subdetektoren 201(3,1) bis 201(5,4). Der Makropixel 202-3 und der Makropixel 202-4 umfassen beide die Subdetektoren 201(4,1) bis 201(6,4). Der Makropixel 202-4 und der Makropixel 202-5 umfassen beide die Subdetektoren 201(5,1) bis 201 (7,4). Mit anderen Worten sind jeweils wenigstens zwei der Makropixel 202-1 bis 202-5 miteinander überlappend ausgebildet. Für jedes der Makropixel 202-1 bis 202-5 kann mittels der Prozessoreinheit 108 ein Histogramm erzeugt und ausgewertet werden.

Gemäß dem Beispiel aus Figur 4 sind die Makropixel entlang der ersten Erstreckungsrichtung 203 verschoben gruppierbar. Beispielsweise ist das zweite Makropixel 202-2 entlang der ersten Erstreckungsrichtung 203 verschoben zum ersten Makropixel 202-1 gruppierbar. Gleiches gilt für die drei weiteren Makropixel 202-3 und 202-5. Wie aus Figur 4 und der eben erfolgten Beschreibung weiterhin hervorgeht, ist der zweite Makropixel 202-2 um genau einen Subdetektor 201i,j entlang der ersten Erstreckungsrichtung 203 verschoben zum ersten Makropixel 202-1 gruppierbar. Gleiches gilt für den dritten Makropixel 202-3, der um genau einen Subdetektor 201i,j entlang der ersten Erstreckungsrichtung 203 verschoben zum Makropixel 202-2 gruppierbar ist, usw.. Mit anderen Worten ist jeweils ein Makropixel 202-n um genau einen Subdetektor 201i,j entlang der ersten Erstreckungsrichtung 203 verschoben zum vorherigen Makropixel 202-(n-1) gruppierbar. Hierdurch kann gewährleistet werden, dass von einem Objekt nicht nur ein einziger, sondern mindestens zwei Punkte erfasst werden. Ein Objekt im Sichtfeld des LIDAR-Sensors kann mit höherer Wahrscheinlichkeit erfasst werden. Eine bessere Verifikation des Objekts wird ermöglicht.

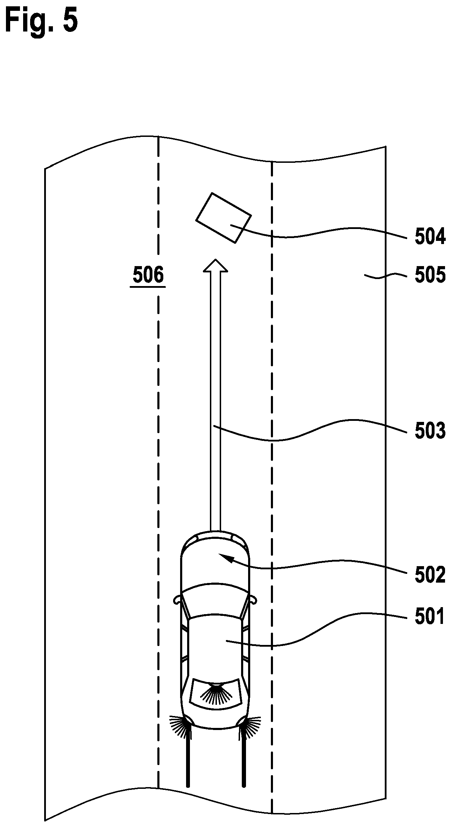

Figur 5 zeigt ein Anwendungsbeispiel für den LIDAR-Sensor zur Erfassung eines Objekts 504. Es ist ein Fahrzeug 501 dargestellt, welches an einem Einbauort 502 einen oben beschriebenen, hier nicht extra dargestellten LIDAR-Sensor 100 aufweist. Das Fahrzeug 501 bewegt sich auf der Fahrbahn 505 einer Straße fort. Mittels des LIDAR-Sensors 100 kann Primärlicht 503 in das Sichtfeld 506 des LIDAR-Sensors 100 ausgesendet werden. Mittels einer Empfangseinheit 103 des LIDAR-Sensors 100 kann Sekundärlicht, das im Sichtfeld 506 von einem Objekt 504 reflektiert und/oder gestreut wurde, empfangen werden. Das Objekt 504 kann ein kleines Objekt 504 in großer Reichweite, sprich in großer Entfernung vom LIDAR-Sensor 100, sein. Bei dem Objekt 504 kann es sich beispielsweise um ein verlorenes Frachtstück handeln. Das Objekt 504 kann möglicherweise absorbierend (Reflektivität ca. 5%) ausgebildet sein. Gegebenenfalls kann die Fahrbahn 505 deutlich stärker reflektieren (bis zu 30%).

Insbesondere im Fall der eben beschriebenen Eigenschaften des Objekts 504 und der Fahrbahn 505 konnte die Erfassung eines solchen Objekts 504 mittels bisher bekannter LIDAR-Sensoren schwierig sein. In solch einem Fall konnte das Signal bisher nur sehr gering sein. Hier kommt die oben beschriebene Erfindung zu tragen. Ein LIDAR-Sensor wie er beispielhaft in Figur 1 beschrieben wurde, aufweisend eine Detektoreinheit 104, welche eine matrixförmige Subdetektoranordnung umfasst, deren Aufbau und Funktionsweise beispielhaft in den Figuren 2-4 erläutert wurde, kann dieses Problem umgehen. Ein kleines Objekt 504 kann auch in größerer Entfernung gut erfasst werden.

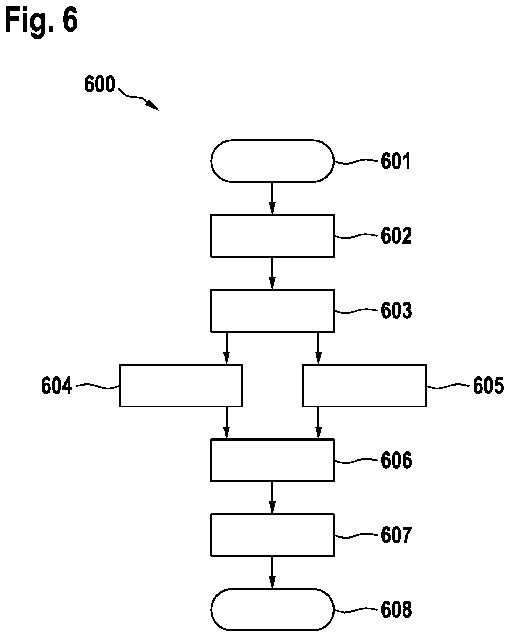

Figur 6 zeigt als ein Ausführungsbeispiel das Verfahren 600 für einen LIDAR-Sensor zur Erfassung eines Objekts. Das Verfahren startet im Schritt 601. Im Schritt 602 wird mittels einer wenigstens eine Laserquelle aufweisenden Sendeeinheit des LIDAR-Sensors Primärlicht erzeugt und in das Sichtfeld ausgesendet. Im Schritt 603 wird Sekundärlicht empfangen, das im Sichtfeld von einem Objekt reflektiert und/oder gestreut wurde, mittels einer wenigstens eine Detektoreinheit aufweisenden Empfangseinheit, wobei die Detektoreinheit eine matrixförmige Subdetektoranordnung aus mehreren in einer ersten Erstreckungsrichtung nebeneinander und in einer zweiten Erstreckungsrichtung hintereinander angeordneter Subdetektoren umfasst. Im Schritt 604 wird eine erste Gruppe Subdetektoren aus einer Mehrzahl von Subdetektoren ausgewählt und diese erste Gruppe zu einem ersten Makropixel mittels einer Prozessoreinheit des LIDAR-Sensors gruppiert. Gleichzeitig wird im Schritt 605 wenigstens eine zweite Gruppe Subdetektoren aus der Mehrzahl von Subdetektoren ausgewählt und diese wenigstens zweite Gruppe zu wenigstens einem zweiten Makropixel mittels der Prozessoreinheit gruppiert. Hierbei umfassen der erste Makropixel und wenigstens einer der zweiten Makropixel wenigstens einen selben Subdetektor. Im Schritt 606 kommt es zur Auswertung des ersten und des wenigstens einen zweiten Makropixels. Für jedes der Makropixel kann beispielsweise mittels der Prozessoreinheit ein Histogramm erzeugt und ausgewertet werden. Im Schritt 607 kommt es zur Erfassung wenigstens eines Objekts im Sichtfeld anhand wenigstens des ersten ausgewerteten Makropixels. Das Verfahren 600 endet im Schritt 608.

Es kann möglich sein, dass im Schritt 606 bereits im ersten Makropixel Daten eines Objekts ausgewertet wurden. Entsprechend ist es möglich, dass es im Schritt 607 bereits zur Erkennung eines Objekts im Sichtfeld kommt. Die Erfassung 607 des Objekts wäre in diesem Fall mit einer Erkennung des Objekts im Sichtfels gleichzusetzen. In diesem Fall kann die Information aus einer Auswertung 606 eines wenigstens zweiten Makropixels gegebenenfalls verworfen werden.

Bevorzugt erfolgt die Erfassung 607 des wenigstens einen Objekts zusätzlich anhand des wenigstens einen zweiten ausgewerteten Makropixels. Wurde beispielsweise im Schritt der Erfassung 607 wenigstens eines Objekts im Sichtfeld anhand wenigstens des ersten ausgewerteten Makropixels kein Objekt erkannt, erfolgt die Erfassung 607 des wenigstens einen Objekts bevorzugt zusätzlich anhand des wenigstens einen zweiten ausgewerteten Makropixels. In diesem Fall würde die Information aus einer Auswertung 606 eines wenigstens zweiten Makropixels nicht verworfen, sondern berücksichtigt werden.

Um jedoch eine zu verarbeitende Datenmenge nicht unnötig zu erhöhen, erfolgt die Erfassung 607 des wenigstens einen Objekts bevorzugt nur dann zusätzlich anhand des wenigstens einen zweiten ausgewerteten Makropixels, wenn anhand des ersten ausgewerteten Makropixels kein Objekt erfassbar ist.

Anhand der in Figur 2 dargestellten Ausführungsform des Subdetektoranordnung 205 würde das Verfahren 600 beispielhaft wie folgt ablaufen: Mittels der Prozessoreinheit werden in den Schritten 604 und 605, wie bereits bei Figur 2 erläutert, die Makropixel 202-1 bis 202-4 ausgewählt und gruppiert. Hierbei wird jeweils ein zweiter Makropixel entlang der zweiten Erstreckungsrichtung 204 verschoben zum vorherigen Makropixel gruppiert. (Analog lässt sich anhand der Figuren 3 und 4 erkennen, dass in den Schritten 604 und 605 wenigstens ein zweiter Makropixel auch entlang der ersten Erstreckungsrichtung 203 und/oder entlang der zweiten Erstreckungsrichtung 204 verschoben zum ersten Makropixel gruppiert werden kann.) Im Schritt 606 werden die Makropixel 202-1 bis 202-4 ausgewertet. Hierfür können die Signale des Sekundärlichts, welches mittels der Subdetektoren 201i,j der Detektoreinheit erfasst wurden, verarbeitet werden. Werden im Schritt 606 bereits für Makropixel 202-1 Daten eines Objekts ausgewertet, kann es im Schritt 607 bereits zur Erkennung eines Objekts im Sichtfeld anhand dieser Daten aus Makro-Pixel 202-1 kommen. Die Information aus der Auswertung 606 des Makropixels 202-2 können verworfen werden. Wird jedoch im Schritt 607 anhand des ausgewerteten Makropixels 202-1 jedoch beispielsweise kein Objekt erkannt, würde die Information aus einer Auswertung 606 des Makropixels 202-2 nicht verworfen, sondern berücksichtigt werden. Es kann die Erfassung 607 des wenigstens einen Objekts zusätzlich anhand des Makropixels 202-2 erfolgen.

Anhand der in Figur 4 dargestellten Ausführungsform des Subdetektoranordnung 205 ist erkennbar, dass in den Schritten 604 und 605 der wenigstens eine zweite Makropixel beispielsweise um genau einen Subdetektor verschoben zum ersten Makropixel gruppiert werden kann. Hierdurch kann gewährleistet werden, dass von einem Objekt nicht nur ein einziger, sondern mindestens zwei Punkte erfasst werden. Um in diesem Fall jedoch eine unnötig große Menge an Histogrammen zu vermeiden, für die eine hohe Rechenleistung nötig wäre, wird bevorzugt für die Auswertung 606 des ersten und des wenigstens zweiten Makropixels Sekundärlicht ausgewählt, welches in einem vorgegebenen Entfernungsbereich des LIDAR-Sensors reflektiert und/oder gestreut wurde. Die Entfernungsbereich liegt hierbei insbesondere im Bereich von 90 bis 120 m. In dieser Entfernung, sprich bei dieser Reichweite, treten am ehesten die oben genannten Szenarien auf. In dieser Entfernung war die Erkennung von kleineren Objekten, wie beispielsweise verlorenen Frachtstücken mittels bisher bekannter LIDAR-Sensoren besonders schwierig. Mittels des hier beschriebenen Verfahrens 600 wird die Erfassung derartiger Objekte nun ermöglicht. Es können hierbei bevorzugt die Makropixel ausgewählt werden, für die im Schritt 606 bereits Daten eines Objekts ausgewertet wurden. Im Schritt 607 kann es anhand dieser Daten aus diesen ausgewählten Makropixeln zur Erkennung eines Objekts im Sichtfeld kommen. Besonders bevorzugt werden hierbei genau zwei Makropixel ausgewählt, für die im Schritt 606 bereits Daten eines Objekts ausgewertet wurden. Insbesondere sind dies zwei Makropixel, bei denen die Hälfte des Sekundärlichts mittels des einen Makropixels und die andere Hälfte des Sekundärlichts mittels des anderen Makropixels empfangen wird. Alternativ kann ein maximales Signal in den Histogrammen für vorgegebene Subdetektor-Abstände ermittelt werden. Auch hierdurch kann eine maximale Reichweite sichergestellt werden.

## Patentansprüche

1. LIDAR-Sensor (100) zur Erfassung wenigstens eines Objekts (504) in einem Sichtfeld (506) des LIDAR-Sensors (100) umfassend:
• eine Sendeeinheit (101) mit wenigstens einer Laserquelle (102) zum Erzeugen und Aussenden von Primärlicht (503) in das Sichtfeld (506);
• eine Empfangseinheit (103) mit wenigstens einer Detektoreinheit (104) zum Empfangen von Sekundärlicht, das im Sichtfeld (506) von einem Objekt (504) reflektiert und/oder gestreut wurde; und wobei die Detektoreinheit (104) eine Subdetektoranordnung (205) aus mehreren in einer ersten Erstreckungsrichtung (203) nebeneinander und/oder in einer zweiten Erstreckungsrichtung (204) hintereinander angeordneter Subdetektoren (201i,j) umfasst; und
• eine Prozessoreinheit (108), mit einer Verarbeitungsschaltung, welche dazu ausgebildet ist, detektiertes Sekundärlicht zu verarbeiten und verarbeitetes Sekundärlicht auszuwerten, aus einer Mehrzahl von Subdetektoren (201i,j) eine erste Gruppe auszuwählen, zu einem ersten Makropixel (202-1) zu gruppieren und für das erste Makropixel (202-1) ein erstes Histogramm zu erzeugen, und gleichzeitig wenigstens eine zweite Gruppe auszuwählen, zu wenigstens einem zweiten Makropixel (202-2 bis 202-5) zu gruppieren und für das wenigstens eine zweite Makropixel (202-2 bis 202-5) ein wenigstens zweites Histogramm zu erzeugen, wobei der erste Makropixel (202-1) und wenigstens einer der zweiten Makropixel (202-2 bis 202-5) wenigstens einen selben Subdetektor (201i,j) umfassen, und den ersten und wenigstens einen zweiten Makropixel (202-2 bis 202-5) auszuwerten, wobei das Histogramm des ersten Makropixels (202-1) und das Histogramm des wenigstens einen zweiten Makropixels (202-2 bis 202-5) ausgewertet wird; wobei die Prozessoreinheit (108) weiterhin dazu ausgebildet ist, das wenigstens eine Objekt (504) im Sichtfeld (506) anhand wenigstens des ersten ausgewerteten Makropixels (202-1) zu erfassen und das wenigstens eine Objekt (504) zusätzlich anhand des wenigstens einen zweiten ausgewerteten Makropixels (202-2 bis 202-5) zu erfassen;
**dadurch gekennzeichnet, dass**
• die Prozessoreinheit (108) weiterhin dazu ausgebildet ist, das wenigstens eine Objekt (504) nur dann zusätzlich anhand des wenigstens einen zweiten ausgewerteten Makropixels zu erfassen, wenn anhand des ersten ausgewerteten Makropixels (202-1) kein Objekt erkennbar ist.

2. LIDAR-Sensor (100) nach Anspruch 1, wobei der wenigstens eine zweite Makropixel (202-2 bis 202-5) entlang der ersten Erstreckungsrichtung (203) und/oder entlang der zweiten Erstreckungsrichtung (204) verschoben zum ersten Makropixel (202-1) gruppierbar ist.

3. LIDAR-Sensor (100) nach Anspruch 2, wobei der wenigstens eine zweite Makropixel (202-2 bis 202-5) um genau einen Subdetektor (201i,j) verschoben zum ersten Makropixel (202-1) gruppierbar ist.

4. Verfahren (600) für einen LIDAR-Sensor zur Erfassung eines Objekts in einem Sichtfeld des LIDAR-Sensors aufweisend die Schritte:
• Erzeugen und Aussenden (602) von Primärlicht in das Sichtfeld mittels einer wenigstens eine Laserquelle aufweisenden Sendeeinheit;
• Empfangen von Sekundärlicht (603), das im Sichtfeld von einem Objekt reflektiert und/oder gestreut wurde, mittels einer wenigstens eine Detektoreinheit aufweisenden Empfangseinheit, wobei die Detektoreinheit eine Subdetektoranordnung aus mehreren in einer ersten Erstreckungsrichtung nebeneinander und/oder in einer zweiten Erstreckungsrichtung hintereinander angeordneter Subdetektoren umfasst;
• Auswählen (604) einer ersten Gruppe Subdetektoren aus einer Mehrzahl von Subdetektoren, Gruppieren (604) dieser ersten Gruppe zu einem ersten Makropixel und Erzeugen eines ersten Histogramms für das erste Makropixel mittels einer Prozessoreinheit mit einer Verarbeitungsschaltung; und gleichzeitiges Auswählen (605) wenigstens einer zweiten Gruppe Subdetektoren aus der Mehrzahl von Subdetektoren, Gruppieren (605) dieser wenigstens zweiten Gruppe zu wenigstens einem zweiten Makropixel und Erzeugen eines wenigstens zweiten Histogramms für das wenigstens eine zweite Makropixel mittels der Prozessoreinheit; wobei der erste Makropixel und wenigstens einer der zweiten Makropixel wenigstens einen selben Subdetektor umfassen;
• Auswertung (606) des ersten und des wenigstens einen zweiten Makropixels, wobei das Histogramm des ersten Makropixels und das Histogramm des wenigstens einen zweiten Makropixels ausgewertet wird; und
• Erfassung (607) wenigstens eines Objekts im Sichtfeld anhand wenigstens des ersten ausgewerteten Makropixels, wobei die Erfassung (607) des wenigstens einen Objekts zusätzlich anhand des wenigstens einen zweiten ausgewerteten Makropixels erfolgt;
**dadurch gekennzeichnet, dass**
• die Erfassung (607) des wenigstens einen Objekts nur dann zusätzlich anhand des wenigstens einen zweiten ausgewerteten Makropixels erfolgt, wenn anhand des ersten ausgewerteten Makropixels kein Objekt erkennbar ist.

5. Verfahren (600) nach Anspruch 4, wobei der wenigstens eine zweite Makropixel entlang der ersten Erstreckungsrichtung und/oder entlang der zweiten Erstreckungsrichtung verschoben zum ersten Makropixel gruppiert wird.

6. Verfahren (600) nach Anspruch 5, wobei der wenigstens eine zweite Makropixel um genau einen Subdetektor verschoben zum ersten Makropixel gruppiert wird.

7. Computerprogramm, welches eingerichtet ist, in einem LIDAR-Sensor (100) nach Anspruch 1 alle von der Prozessoreinheit (108) auszuführenden Schritte im Verfahren (600) nach einem der Ansprüche 4 bis 6 auszuführen.

8. Maschinenlesbares Speichermedium, auf dem das Computerprogramm gemäß Anspruch 7 gespeichert ist.

## Claims

1. LIDAR sensor (100) for detecting at least one object (504) in a field of view (506) of the LIDAR sensor (100), comprising:
• a transmitting unit (101) having at least one laser source (102) for generating and emitting primary light (503) into the field of view (506);
• a receiving unit (103) having at least one detector unit (104) for receiving secondary light that has been reflected and/or scattered in the field of view (506) by an object (504); and wherein the detector unit (104) comprises a subdetector arrangement (205) composed of a plurality of subdetectors (201 i,j) arranged next to one another in a first direction of extent (203) and/or one behind another in a second direction of extent (204); and
• a processor unit (108), having a processing circuit, which is designed to process detected secondary light and to evaluate processed secondary light, from a plurality of subdetectors (201 i,j) to select a first group, to group the latter to form a first macropixel (202-1) and to generate a first histogram for the first macropixel (202-1), and simultaneously to select at least one second group, to group the latter to form at least one second macropixel (202-2 to 202-5) and to generate an at least second histogram for the at least one second macropixel (202-2 to 202-5), wherein the first macropixel (202-1) and at least one of the second macropixels (202-2 to 202-5) comprise at least one same subdetector (201 i,j), and to evaluate the first and at least one second macropixel (202-2 to 202-5), wherein the histogram of the first macropixel (202-1) and the histogram of the at least one second macropixel (202-2 to 202-5) are evaluated; wherein the processor unit (108) is furthermore designed to detect the at least one object (504) in the field of view (506) on the basis of at least the first evaluated macropixel (202-1) and to detect the at least one object (504) additionally on the basis of the at least one second evaluated macropixel (202-2 to 202-5);
**characterized in that**
• the processor unit (108) is furthermore designed to detect the at least one object (504) additionally on the basis of the at least one second evaluated macropixel only if no object is recognizable on the basis of the first evaluated macropixel (202-1).

2. LIDAR sensor (100) according to Claim 1, wherein the at least one second macropixel (202-2 to 202-5) can be grouped in a manner displaced along the first direction of extent (203) and/or along the second direction of extent (204), relative to the first macropixel (202-1).

3. LIDAR sensor (100) according to Claim 2, wherein the at least one second macropixel (202-2 to 202-5) can be grouped in a manner displaced by exactly one subdetector (201 i,j) relative to the first macropixel (202-1).

4. Method (600) for a LIDAR sensor for detecting an object in a field of view of the LIDAR sensor, comprising the following steps:
• generating and emitting (602) primary light into the field of view by means of a transmitting unit comprising at least one laser source;
• receiving secondary light (603) that has been reflected and/or scattered in the field of view by an object, by means of a receiving unit comprising at least one detector unit, wherein the detector unit comprises a subdetector arrangement composed of a plurality of subdetectors arranged next to one another in a first direction of extent and/or one behind another in a second direction of extent;
• selecting (604) a first group of subdetectors from a plurality of subdetectors, grouping (604) this first group to form a first macropixel and generating a first histogram for the first macropixel by means of a processor unit having a processing circuit; and simultaneously selecting (605) at least one second group of subdetectors from the plurality of subdetectors, grouping (605) this at least second group to form at least one second macropixel and generating an at least second histogram for the at least one second macropixel by means of the processor unit; wherein the first macropixel and at least one of the second macropixels comprise at least one same subdetector;
• evaluating (606) the first and the at least one second macropixel, wherein the histogram of the first macropixel and the histogram of the at least one second macropixel are evaluated; and
• detecting (607) at least one object in the field of view on the basis of at least the first evaluated macropixel, wherein detecting (607) the at least one object takes place additionally on the basis of the at least one second evaluated macropixel;
**characterized in that**
• detecting (607) the at least one object takes place additionally on the basis of the at least one second evaluated macropixel only if no object is recognizable on the basis of the first evaluated macropixel.

5. Method (600) according to Claim 4, wherein the at least one second macropixel is grouped in a manner displaced along the first direction of extent and/or along the second direction of extent, relative to the first macropixel.

6. Method (600) according to Claim 5, wherein the at least one second macropixel is grouped in a manner displaced by exactly one subdetector relative to the first macropixel.

7. Computer program which is configured, in a LIDAR sensor (100) according to Claim 1, to carry out all steps to be carried out by the processor unit (108) in the method (600) according to any of Claims 4 to 6.

8. Machine-readable storage medium on which the computer program according to Claim 7 is stored.

## Revendications

1. Capteur LIDAR (100) servant à la détection d'au moins un objet (504) dans un champ de vision (506) du capteur LIDAR (100), comprenant :
• une unité d'émission (101) présentant au moins une source laser (102) destinée à générer et à émettre une lumière primaire (503) dans le champ de vision (506) ;
• une unité de réception (103) présentant au moins une unité de détection (104) destinée à recevoir une lumière secondaire réfléchie et/ou diffusée dans le champ de vision (506) par un objet (504) ; et l'unité de détection (104) comprenant un ensemble de sous-détecteurs (205) formé de plusieurs sous-détecteurs (201 i,j) placés côte à côte dans une première direction d'extension (203) et/ou dans une deuxième direction d'extension (204) ; et
• une unité de traitement (108), comprenant un circuit de traitement conçu pour traiter la lumière secondaire détectée et évaluer la lumière secondaire traitée, sélectionner un premier groupe parmi une pluralité de sous-détecteurs (201 i,j), le regrouper en un premier macro-pixel (202-1) et créer un premier histogramme pour le premier macro-pixel (202-1), et sélectionner simultanément au moins un deuxième groupe, le regrouper en au moins un deuxième macro-pixel (202-2 à 202-5) et créer au moins un deuxième histogramme pour ledit au moins un deuxième macro-pixel (202-2 à 202-5), le premier macro-pixel (202-1) et au moins l'un des deuxièmes macro-pixels (202-2 à 202-5) comprenant au moins un même sous-détecteur (201 i,j), et évaluer le premier et au moins un deuxième macro-pixel (202-2 à 202-5), l'histogramme du premier macro-pixel (202-1) et l'histogramme dudit au moins un deuxième macro-pixel (202-2 à 202-5) étant évalués ; l'unité de traitement (108) étant en outre conçue pour détecter ledit au moins un objet (504) dans le champ de vision (506) à l'aide d'au moins un premier macro-pixel (202-1) évalué et pour détecter en outre ledit au moins un objet (504) dudit au moins un deuxième macro-pixel (202-2 à 202-5) évalué ;
**caractérisé en ce que**
• l'unité de traitement (108) est en outre conçue pour détecter ledit au moins un objet (504) sur la base dudit au moins un deuxième macro-pixel évalué seulement si aucun objet n'est reconnaissable sur la base du premier macro-pixel évalué (202-1).

2. Capteur LIDAR (100) selon la revendication 1, dans lequel au moins un deuxième macro-pixel (202-2 à 202-5) peut être regroupé le long de la première direction d'extension (203) et/ou le long de la deuxième direction d'extension (204) en ledit premier macro-pixel (202-1).

3. Capteur LIDAR (100) selon la revendication 2, dans lequel ledit au moins un deuxième macro-pixel (202-2 à 202-5) peut être regroupé en étant déplacé d'exactement un sous-détecteur (201 i,j) vers le premier macro-pixel (202-1).

4. Procédé (600) destiné à un capteur LIDAR servant à la détection d'un objet dans un champ de vision du capteur LIDAR comprenant les étapes consistant à :
• générer et émettre (602) une lumière primaire dans le champ de vision au moyen d'une unité d'émission comportant au moins une source laser ;
• recevoir une lumière secondaire (603) réfléchie et/ou diffusée dans le champ de vision par un objet au moyen d'une unité de réception comportant au moins une unité de réception, l'unité de réception comprenant un ensemble de sous-détecteurs constitué de plusieurs sous-détecteurs placés côte à côte dans une première direction d'extension et/ou dans une deuxième direction d'extension ;
• sélectionner (604) un premier groupe de sous-détecteurs parmi une pluralité de sous-détecteurs, regrouper (604) ce premier groupe en un premier macro-pixel et générer un premier histogramme pour le premier macro-pixel au moyen d'une unité de traitement ; et sélectionner simultanément (605) au moins un deuxième groupe de sous-détecteurs parmi la pluralité des sous-détecteurs, regrouper (605) ledit au moins un deuxième groupe en au moins un deuxième macro-pixel et générer au moins un deuxième histogramme pour ledit au moins un deuxième macro-pixel au moyen de l'unité de traitement ; le premier macro-pixel et au moins l'un des deuxièmes macro-pixels comprenant au moins un même sous-détecteur ;
• évaluer (606) le premier et ledit au moins un deuxième macro-pixel, l'histogramme du premier macro-pixel et l'histogramme dudit au moins un deuxième macro-pixel étant évalués ; et
• détecter (607) au moins un objet dans le champ de vision sur la base d'au moins le premier macro-pixel évalué, la détection (607) dudit au moins un objet étant en outre effectuée sur la base d'au moins un deuxième macro-pixel évalué ;
**caractérisé en ce que**
• la détection (607) dudit au moins un objet est en outre effectuée sur la base dudit au moins un deuxième macro-pixel évalué seulement si aucun objet n'est reconnaissable sur la base du premier macro-pixel évalué.

5. Procédé (600) selon la revendication 4, dans lequel ledit au moins un deuxième macro-pixel est regroupé en le premier macro-pixel en étant déplacé le long de la première direction d'extension et/ou le long de la deuxième direction d'extension.

6. Procédé (600) selon la revendication 5, dans lequel ledit au moins un deuxième macro-pixel est regroupé en le premier macro-pixel en étant déplacé d'exactement un sous-détecteur.

7. Programme d'ordinateur configuré pour effectuer dans un capteur LIDAR (100) selon la revendication 1 toutes les étapes devant être effectuées par l'unité de processeur (108) dans le procédé (600) selon l'une des revendications 4 à 6.

8. Support de stockage lisible par machine sur lequel est stocké le programme informatique selon la revendication 7.
